# EUROPEAN PATENT APPLICATION

(11) **EP 2 999 277 A1**
(43) Date of publication of application: **23.03.2016**
(21) Application number: 14817320.6
(22) Date of filing: 30.06.2014
(51) Int. Cl.: H04W 52/12

(54) **DATA TRANSMISSION AND RECEPTION METHOD AND DEVICE**

(30) Priority: 29.06.2013 CN 201310270200
(71) Applicant: Huawei Technologies Co., Ltd., Longgang District Shenzhen, Guangdong 518129 (CN)
(72) Inventor: TIE, Xiaolei, Shenzhen Guangdong 518129 (CN); HUA, Meng, Shenzhen Guangdong 518129 (CN); JIAO, Shurong, Shenzhen Guangdong 518129 (CN)
(74) Representative: Pfenning, Meinig & Partner mbB
(86) International application number: PCT/CN2014/081090
(87) International publication number: WO 2014/206365

(57) **Abstract**

Embodiments of the present invention provide data sending and receiving methods and devices. The method includes: sending a first data transmit power control command TPC and first service data to first user equipment UE in a first sending time period, so that the first UE performs inner loop power control according to the first data TPC and receives the first service data; and sending a second preamble transmit power control command TPC to second user equipment UE in a second pre-configured time period, so that the second UE establishes inner loop power control according to the second preamble transmit power control command TPC and receives second service data in a second sending time period, where the first service data and the second service data are sent on a same code channel in a time division multiplexing manner, the first data TPC and the second preamble TPC are sent on different channels, and an overlap time period exists between the first sending time period and the second pre-configured time period. The embodiments can improve transmission efficiency of a downlink code channel.

## Description

### TECHNICAL FIELD

Embodiments of the present invention relate to the field of communications technologies, and in particular, to data sending and receiving methods and devices.

### BACKGROUND

Both a signaling radio bearer (Signaling Radio Bearer, SRB for short) service and a voice service in a universal mobile telecommunications system (Universal Mobile Telecommunications System, UMTS for short) are mainly transmitted by using a dedicated physical channel (Dedicated Physical Channel, DPCH for short) in the Wideband Code Division Multiple Access (Wideband Code Division Multiple Access, WCDMA for short) communications protocol version R99.

In the prior art, a DPCH includes a dedicated physical data channel (Dedicated Physical Data Channel, DPDCH for short) and a dedicated physical control channel (Dedicated Physical Control Channel, DPCCH for short). The DPDCH implements a physical layer data bearer, and the DPCCH includes a known pilot bit that supports channel estimation for performing coherent detection, a transmit power control instruction, and an optional transport format combination indicator.

However, a downlink code channel capacity of the UMTS system is limited, and a code channel needs to be occupied exclusively for transmission of an existing R99 DPDCH; therefore, a downlink R99 capacity is limited.

### SUMMARY

Embodiments of the present invention provide data sending and receiving methods and devices, so that a same code channel is multiplexed by multiple users for R99 DPDCH transmission in downlink.

According to a first aspect, an embodiment of the present invention provides a data sending method, including:
sending a first data transmit power control command TPC and first service data to first user equipment UE in a first sending time period, so that the first UE performs inner loop power control according to the first data TPC and receives the first service data; and
sending a second preamble transmit power control command TPC to second user equipment UE in a second pre-configured time period, so that the second UE establishes inner loop power control according to the second preamble TPC and receives second service data in a second sending time period, where
the first service data and the second service data are sent on a same code channel in a time division multiplexing manner, the first data TPC and the second preamble TPC are sent on different channels, and an overlap time period exists between the first sending time period and the second pre-configured time period.

With reference to the first aspect, in a first possible implementation manner of the first aspect, before the sending a first data transmit power control command TPC and first service data to first user equipment UE in a first sending time period, the method further includes:
sending a first preamble TPC to the first UE in a first pre-configured time period, so that the first UE establishes inner loop power control according to the first preamble TPC and receives the first service data in the first sending time period; and
after the sending a second preamble transmit power control command TPC to second user equipment UE in a second pre-configured time period, the method further includes:
   sending a second data TPC and the second service data to the second UE in the second sending time period, so that the second UE performs inner loop power control according to the second data TPC and receives the second service data.

With reference to the first possible implementation manner of the first aspect, in a second possible implementation manner of the first aspect, the sending a first data transmit power control command TPC and first service data to first user equipment UE in a first sending time period includes:
sending the first data TPC to the first UE in the first sending time period by using a first dedicated physical control channel DPCCH, and sending the first service data to the first UE in the first sending time period by using a first dedicated physical data channel DPDCH; and
the sending a second data TPC and the second service data to the second UE in the second sending time period includes:
   sending the second data TPC to the second UE in the second sending time period by using a second DPCCH, and sending the second service data to the second UE in the second sending time period by using a second DPDCH, where
   the first data TPC and the first service data are sent on a same code channel in a time division multiplexing manner, and the second data TPC and the second service data are sent on a same code channel in a time division multiplexing manner.

With reference to the second possible implementation manner of the first aspect, in a third possible implementation manner of the first aspect, the sending a first preamble TPC to the first UE in a first pre-configured time period includes:
sending the first preamble TPC to the first UE in the first pre-configured time period by using a first fractional dedicated physical control channel F-DPCH; and
the sending a second preamble transmit power control command TPC to second user equipment UE in a second pre-configured time period includes:
   sending the second preamble TPC to the second UE in the second pre-configured time period by using the first F-DPCH.

With reference to the first possible implementation manner of the first aspect, in a fourth possible implementation manner of the first aspect, the sending a first data transmit power control command TPC and first service data to first user equipment UE in a first sending time period includes:
sending the first data TPC to the first UE in the first sending time period by using a third fractional dedicated physical control channel F-DPCH, and sending the first service data to the first UE in the first sending time period by using a third dedicated physical data channel DPDCH; and
the sending a second data TPC and the second service data to the second UE in the second sending time period includes:
   sending the second data TPC to the second UE in the second sending time period by using a fifth F-DPCH, and sending the second service data to the second UE in the second sending time period by using a fourth DPDCH, where
   the first data TPC and the first service data are sent on different code channels, and the second data TPC and the second service data are sent on different code channels.

With reference to the fourth possible implementation manner of the first aspect, in a fifth possible implementation manner of the first aspect, the sending a first preamble TPC to the first UE in a first pre-configured time period includes:
sending the first preamble TPC to the first UE in the first pre-configured time period by using a second F-DPCH; and
the sending a second preamble transmit power control command TPC to second user equipment UE in a second pre-configured time period includes:
   sending the second preamble TPC to the second UE in the second pre-configured time period by using a fourth F-DPCH.

With reference to the fifth possible implementation manner of the first aspect, in a sixth possible implementation manner of the first aspect, the second F-DPCH, the third F-DPCH, the fourth F-DPCH, and the fifth F-DPCH are different F-DPCHs; or
the second F-DPCH and the fourth F-DPCH are multiplexed on a same F-DPCH, and the third F-DPCH and the fifth F-DPCH are multiplexed on a same F-DPCH; or
the second F-DPCH and the third F-DPCH are multiplexed on a same F-DPCH, and the fourth F-DPCH and the fifth F-DPCH are multiplexed on a same F-DPCH.

With reference to the sixth possible implementation manner of the first aspect, in a seventh possible implementation manner of the first aspect, when the second F-DPCH and the third F-DPCH are multiplexed on a same F-DPCH, after the sending a second data transmit power control command TPC and the second service data to the second UE in the second sending time period, the method further includes:
sending a third data TPC to third UE in a third sending time period by using the third F-DPCH, and sending third service data to the third UE in the third sending time period by using a fifth dedicated physical data channel DPDCH; and
before the third sending time period, sending a third preamble TPC to the third UE in a third pre-configured time period by using the second F-DPCH, where the third pre-configured time period overlaps the second sending time period.

With reference to the sixth possible implementation manner of the first aspect, in an eighth possible implementation manner of the first aspect, when the third F-DPCH and the fifth F-DPCH are multiplexed on a same F-DPCH, and the second F-DPCH and the fourth F-DPCH are multiplexed on a same F-DPCH, after the sending a second data transmit power control command TPC and the second service data to the second UE in the second sending time period, the method further includes:
sending a third data TPC to third UE in a third sending time period by using the third F-DPCH, and sending third service data to the third UE in the third sending time period by using a sixth dedicated physical data channel DPDCH; and
before the third sending time period, sending a third preamble TPC to the third UE in a third pre-configured time period by using the second F-DPCH, where the third pre-configured time period overlaps the second sending time period.

According to a second aspect, an embodiment of the present invention provides a data receiving method, including:
receiving, by user equipment UE, a preamble transmit power control command TPC that is sent in a pre-configured time period by a base station, and establishing inner loop power control according to the preamble TPC;
receiving, by the UE, a data transmit power control command TPC that is sent in a sending time period by the base station, and performing inner loop power control according to the data TPC; and
receiving, by the UE according to the inner loop power control, service data that is sent in the sending time period by the base station, where
the service data sent by the base station to the UE and service data sent by the base station to another UE are sent on a same code channel in a time division multiplexing manner, and the pre-configured time period overlaps a sending time period of the another UE.

With reference to the second aspect, in a first possible implementation manner of the second aspect, the receiving, by user equipment UE, a preamble transmit power control command TPC that is sent in a pre-configured time period by a base station includes:
receiving, by the UE, the preamble TPC that is sent in the pre-configured time period by using a first fractional dedicated physical data channel F-DPCH by the base station;
the receiving, by the UE, a data transmit power control command TPC that is sent in a sending time period by the base station includes:
   receiving, by the UE, the data TPC that is sent by using a dedicated physical control channel DPCCH by the base station; and
   the receiving, by the UE, service data that is sent in the sending time period by the base station includes:
receiving, by the UE, the service data that is sent in the sending time period by using a first dedicated physical data channel DPDCH by the base station, where
the data TPC and the service data are received on a same code channel in a time division multiplexing manner.

With reference to the second aspect, in a second possible implementation manner of the second aspect, the receiving, by user equipment UE, a preamble transmit power control command TPC that is sent in a pre-configured time period by a base station includes:
receiving, by the UE, the preamble TPC that is sent in the pre-configured time period by using a second fractional dedicated physical data channel F-DPCH by the base station;
the receiving, by the UE, a data transmit power control command TPC that is sent in a sending time period by the base station includes:
   receiving, by the UE, the data TPC that is sent by using the third fractional dedicated physical data channel F-DPCH by the base station; and
   the receiving, by the UE, service data that is sent in the sending time period by the base station includes:
      receiving, by the UE, the service data that is sent in the sending time period by using a second dedicated physical data channel DPDCH by the base station, where
      the service data and the data TPC are received on different code channels.

With reference to the second possible implementation manner of the second aspect, in a third possible implementation manner of the second aspect, the second F-DPCH and the third F-DPCH are different F-DPCHs; or
the second F-DPCH and the third F-DPCH are multiplexed on a same F-DPCH channel.

With reference to the third possible implementation manner of the second aspect, in a fourth possible implementation manner of the second aspect, when the second F-DPCH and the third F-DPCH are multiplexed on a same F-DPCH channel, and the sending time period corresponding to the UE does not overlap a pre-configured time period, corresponding to another UE, of the another UE,
the receiving, by the UE, the preamble TPC and the data TPC and receiving, by the another UE, the preamble TPC and the data TPC are multiplexed on the second F-DPCH or the third F-DPCH.

With reference to the second possible implementation manner of the second aspect, in a fifth possible implementation manner of the second aspect, when the second F-DPCH and the third F-DPCH are different F-DPCHs, and the sending time period corresponding to the UE overlaps a pre-configured time period, corresponding to another UE, of the another UE,
the receiving, by the UE, the preamble TPC and receiving, by the another UE, the preamble TPC are multiplexed on the second F-DPCH; and the receiving, by the UE, the data TPC and receiving, by the another UE, the data TPC are multiplexed on the third F-DPCH.

According to a third aspect, an embodiment of the present invention provides a base station, including:
a first time period sending module, configured to send a first data transmit power control command TPC and first service data to first user equipment UE in a first sending time period, so that the first UE performs inner loop power control according to the first data TPC and receives the first service data; and
a second pre-configured time period sending module, configured to send a second preamble transmit power control command TPC to second user equipment UE in a second pre-configured time period, so that the second UE establishes inner loop power control according to the second preamble TPC and receives second service data in a second sending time period, where
the first service data and the second service data are sent on a same code channel in a time division multiplexing manner, the first data TPC and the second preamble TPC are sent on different channels, and an overlap time period exists between the first sending time period and the second pre-configured time period.

With reference to the third aspect, in a first possible implementation manner of the third aspect, the base station further includes:
a first pre-configured time period sending module, configured to: before the first data transmit power control command TPC and the first service data are sent to the first user equipment UE in the first sending time period, send a first preamble TPC to the first UE in a first pre-configured time period, so that the first UE establishes inner loop power control according to the first preamble TPC and receives the first service data in the first sending time period; and
a second time period sending module, configured to: after the second preamble transmit power control command TPC is sent to the second user equipment UE in the second pre-configured time period, send a second data TPC and the second service data to the second UE in the second sending time period, so that the second UE performs inner loop power control according to the second data TPC and receives the second service data.

With reference to the first possible implementation manner of the third aspect, in a second possible implementation manner of the third aspect, the first time period sending module is specifically configured to: send the first data TPC to the first UE in the first sending time period by using a first dedicated physical control channel DPCCH, and send the first service data to the first UE in the first sending time period by using a first dedicated physical data channel DPDCH; and
the second time period sending module is specifically configured to: send the second data TPC to the second UE in the second sending time period by using a second DPCCH, and send the second service data to the second UE in the second sending time period by using a second DPDCH, where
the first data TPC and the first service data are sent on a same code channel in a time division multiplexing manner, and the second data TPC and the second service data are sent on a same code channel in a time division multiplexing manner.

With reference to the second possible implementation manner of the third aspect, in a third possible implementation manner of the third aspect, the first pre-configured time period sending module is specifically configured to: send the first preamble TPC to the first UE in the first pre-configured time period by using a first fractional dedicated physical control channel F-DPCH; and
the second pre-configured time period sending module is specifically configured to: send the second preamble TPC to the second UE in the second pre-configured time period by using the first F-DPCH.

With reference to the first possible implementation manner of the third aspect, in a fourth possible implementation manner of the third aspect, the first time period sending module is specifically configured to: send the first data TPC to the first UE in the first sending time period by using a third fractional dedicated physical control channel F-DPCH, and send the first service data to the first UE in the first sending time period by using a third dedicated physical data channel DPDCH; and
the second time period sending module is specifically configured to: send the second data TPC to the second UE in the second sending time period by using a fifth F-DPCH, and send the second service data to the second UE in the second sending time period by using a fourth DPDCH, where
the first data TPC and the first service data are sent on different code channels, and the second data TPC and the second service data are sent on different code channels.

With reference to the fourth possible implementation manner of the third aspect, in a fifth possible implementation manner of the third aspect, the first pre-configured time period sending module is specifically configured to: send the first preamble TPC to the first UE in the first pre-configured time period by using a second F-DPCH; and
the second pre-configured time period sending module is specifically configured to: send the second preamble TPC to the second UE in the second pre-configured time period by using a fourth F-DPCH.

With reference to the fifth possible implementation manner of the third aspect, in a sixth possible implementation manner of the third aspect, the second F-DPCH, the third F-DPCH, the fourth F-DPCH, and the fifth F-DPCH are different F-DPCHs; or
the second F-DPCH and the fourth F-DPCH are multiplexed on a same F-DPCH, and the third F-DPCH and the fifth F-DPCH are multiplexed on a same F-DPCH; or
the second F-DPCH and the third F-DPCH are multiplexed on a same F-DPCH, and the fourth F-DPCH and the fifth F-DPCH are multiplexed on a same F-DPCH.

With reference to the sixth possible implementation manner of the third aspect, in a seventh possible implementation manner of the third aspect, the base station further includes:
a third time period sending module, configured to: when the second F-DPCH and the third F-DPCH are multiplexed on a same F-DPCH, after the second data transmit power control command TPC and the second service data are sent to the second UE in the second sending time period, send a third data TPC to third UE in a third sending time period by using the third F-DPCH, and send third service data to the third UE in the third sending time period by using a fifth dedicated physical data channel DPDCH; and
a third pre-configured time period sending module, configured to: before the third sending time period, send a third preamble TPC to the third UE in a third pre-configured time period by using the second F-DPCH, where the third pre-configured time period overlaps the second sending time period.

With reference to the sixth possible implementation manner of the third aspect, in an eighth possible implementation manner of the third aspect, the base station further includes:
a fourth time period sending module, configured to: when the third F-DPCH and the fifth F-DPCH are multiplexed on a same F-DPCH, and the second F-DPCH and the fourth F-DPCH are multiplexed on a same F-DPCH, after the second data transmit power control command TPC and the second service data are sent to the second UE in the second sending time period, send a third data TPC to third UE in a third sending time period by using the third F-DPCH, and send third service data to the third UE in the third sending time period by using a sixth dedicated physical data channel DPDCH; and
a fourth pre-configured time period sending module, configured to: before the third sending time period, send a third preamble TPC to the third UE in a third pre-configured time period by using the second F-DPCH, where the third pre-configured time period overlaps the second sending time period.

According to a fourth aspect, an embodiment of the present invention provides user equipment, including:
a pre-configured time period receiving module, configured to receive a preamble transmit power control command TPC that is sent in a pre-configured time period by a base station, and establish inner loop power control according to the preamble TPC;
a first time period receiving module, configured to receive a data transmit power control command TPC that is sent in a sending time period by the base station, and perform inner loop power control according to the data TPC; and
a second time period receiving module, configured to receive, according to the inner loop power control, service data that is sent in the sending time period by the base station, where
the service data sent by the base station to the UE and service data sent by the base station to another UE are sent on a same code channel in a time division multiplexing manner, and the pre-configured time period overlaps a sending time period of the another UE.

With reference to the fourth aspect, in a first possible implementation manner of the fourth aspect, the pre-configured time period receiving module is specifically configured to: receive the preamble TPC that is sent in the pre-configured time period by using a first fractional dedicated physical data channel F-DPCH by the base station;
the first time period receiving module is specifically configured to: receive the data TPC that is sent by using a dedicated physical control channel DPCCH by the base station; and
the second time period receiving module is specifically configured to: receive the service data that is sent in the sending time period by using a first dedicated physical data channel DPDCH by the base station, where
the data TPC and the service data are received on a same code channel in a time division multiplexing manner.

With reference to the fourth aspect, in a second possible implementation manner of the fourth aspect, the pre-configured time period receiving module is specifically configured to: receive the preamble TPC that is sent in the pre-configured time period by using a second fractional dedicated physical data channel F-DPCH by the base station;
the first time period receiving module is specifically configured to: receive the data TPC that is sent by using the third fractional dedicated physical data channel F-DPCH by the base station; and
the second time period receiving module is specifically configured to: receive the service data that is sent in the sending time period by using a second dedicated physical data channel DPDCH by the base station, where
the service data and the data TPC are received on different code channels.

With reference to the second possible implementation manner of the fourth aspect, in a third possible implementation manner of the fourth aspect, the second F-DPCH and the third F-DPCH are different F-DPCHs; or
the second F-DPCH and the third F-DPCH are multiplexed on a same F-DPCH channel.

With reference to the third possible implementation manner of the fourth aspect, in a fourth possible implementation manner of the fourth aspect, when the second F-DPCH and the third F-DPCH are multiplexed on a same F-DPCH channel, and the sending time period corresponding to the UE does not overlap a pre-configured time period, corresponding to another UE, of the another UE,
the receiving, by the UE, the preamble TPC and the data TPC and receiving, by the another UE, the preamble TPC and the data TPC are multiplexed on the second F-DPCH or the third F-DPCH.

With reference to the second possible implementation manner of the fourth aspect, in a fifth possible implementation manner of the fourth aspect, when the second F-DPCH and the third F-DPCH are different F-DPCHs, and the sending time period corresponding to the UE overlaps a pre-configured time period, corresponding to another UE, of the another UE,
the receiving, by the UE, the preamble TPC and receiving, by the another UE, the preamble TPC are multiplexed on the second F-DPCH; and the receiving, by the UE, the data TPC and receiving, by the another UE, the data TPC are multiplexed on the third F-DPCH.

The embodiments of the present invention provide data sending and receiving methods and devices. In the data sending method, a base station sends a first data TPC and first service data to first user equipment UE in a first sending time period; and the base station sends a second preamble TPC to second UE in a second pre-configured time period. The first service data and the second service data are sent on a same code channel in a time division multiplexing manner, which resolves a problem that a downlink code channel is limited, and increases a quantity of downlink R99 users; and the first data TPC and the second preamble TPC are sent on different channels, and an overlap time period exists between the first sending time period and the second pre-configured time period, which ensures that the second UE can establish inner loop power control before a second sending time period, so that the second UE can receive, in the second sending time period, the second service data sent by the base station, thereby ultimately improving transmission efficiency of a downlink code channel.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a data sending method according to the present invention;
FIG. 2A is a schematic diagram 1 of multiplexing of dedicated control channels on a code channel according to an embodiment of the present invention;
FIG. 2B is a schematic diagram 2 of multiplexing of dedicated control channels on a code channel according to an embodiment of the present invention;
FIG. 3 is a schematic diagram of introduction of a preamble transmit power control command according to an embodiment of the present invention;
FIG. 4 is a flowchart of Embodiment 1 of a data receiving method according to the present invention;
FIG. 5A is a schematic diagram of a code channel in Embodiment 1 of a data sending and receiving method according to the present invention;
FIG. 5B is a schematic flowchart of Embodiment 1 of a data sending and receiving method according to the present invention;
FIG. 6A is a schematic diagram 1 of a code channel in Embodiment 2 of a data sending and receiving method according to the present invention;
FIG. 6B is a schematic diagram 2 of a code channel in Embodiment 2 of a data sending and receiving method according to the present invention;
FIG. 6C is a schematic diagram 3 of a code channel in Embodiment 2 of a data sending and receiving method according to the present invention;
FIG. 6D is a schematic flowchart of Embodiment 2 of a data sending and receiving method according to the present invention;
FIG. 7 is a schematic structural diagram of Embodiment 1 of a base station according to the present invention;
FIG. 8 is a schematic structural diagram of Embodiment 2 of a base station according to the present invention;
FIG. 9 is a schematic structural diagram of Embodiment 1 of user equipment according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

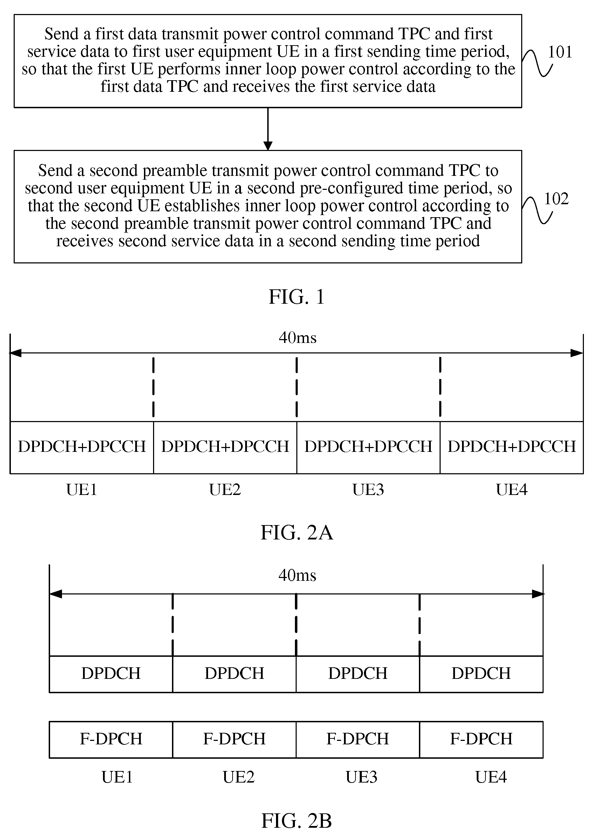

FIG. 1 is a flowchart of Embodiment 1 of a data sending method according to the present invention. As shown in FIG. 1, this embodiment is executed by a base station, and the base station may be implemented by using software and/or hardware. The data sending method provided in this embodiment includes:

Step 101: Send a first data transmit power control command TPC and first service data to first user equipment UE in a first sending time period, so that the first UE performs inner loop power control according to the first data TPC and receives the first service data.

Step 102: Send a second preamble transmit power control command TPC to second user equipment UE in a second pre-configured time period, so that the second UE establishes inner loop power control according to the second preamble transmit power control command TPC and receives second service data in a second sending time period.

The first service data and the second service data are sent on a same code channel in a time division multiplexing manner; the first data transmit power control command (Transmit Power Control, TPC for short) and the second preamble TPC are sent on different channels; and an overlap time period exists between the first sending time period and the second pre-configured time period.

By multiplexing DPCHs of multiple UEs on a same code channel in a time division manner, a downlink R99 capacity (especially for a voice service) is improved.

In a multiplexing process, there are specifically two possible implementation manners, as shown in FIG. 2A and FIG. 2B. FIG. 2A is a schematic diagram 1 of multiplexing of dedicated control channels on a code channel according to this embodiment of the present invention; FIG. 2B is a schematic diagram 2 of multiplexing of dedicated control channels on a code channel according to this embodiment of the present invention.

As shown in FIG. 2A, DPCCHs and DPDCHs of UEs are multiplexed on a same code channel in a time division manner, and then DPCHs of the UEs are multiplexed on a same code channel in a time division manner. That is, within a time period of 40 ms, a DPDCH and a DPCCH of first UE (UE1) that are respectively used for transmitting first service data and a first data transmit power control command occupy the first 10 ms of the code channel, a DPDCH and a DPCCH of second UE (UE2) that are respectively used for transmitting second service data and a second data transmit power control command occupy the second 10 ms of the code channel, and the rest can be deduced by analogy for UE3 and UE4.

As shown in FIG. 2B, DPDCHs of UEs are multiplexed on a same code channel in a time division manner. That is, a DPDCH, of first UE (UE1), used for transmitting first service data occupies the first 10 ms of the code channel; a DPDCH, of second UE (UE2), used for transmitting second service data occupies the second 10 ms of the code channel; and the rest can be deduced by analogy for UE3 and UE4. Then, fractional dedicated physical control channel F-DPCHs replace existing DPCCH channels, and fractional dedicated physical control channels (Fractional-Dedicated Physical Channel, F-DPCH for short) of the UEs are multiplexed on a same code channel in a time division manner. That is, an F-DPCH, of the first UE (UE1), used for transmitting a first data transmit power control command occupies the first 10 ms of the code channel; an F-DPCH, of the second UE (UE2), used for transmitting a second data transmit power control command occupies the second 10 ms of the code channel; and the rest can be deduced by analogy for UE3 and UE4. Channelization code of the DPDCHs is different from channelization code of the F-DPCHs.

By using a code channel multiplexing manner, during interruption time of a data service that exists discontinuously such as a voice service, a data service of another UE may be multiplexed into the interruption time in a time division multiplexing manner, thereby solving a problem that a downlink code channel capacity is limited.

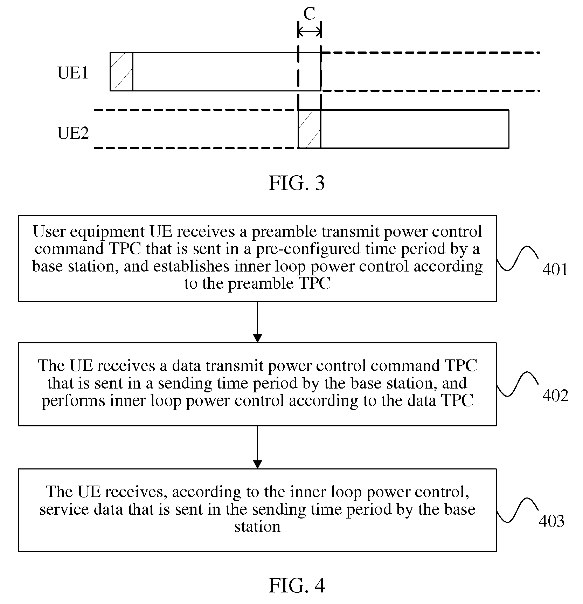

However, in a process of transmitting a DPDCH, transmit power of the DPDCH is set according to a certain pre-configured power offset by using transmit power of a transmit power control command TPC in the DPCCH or transmit power of an F-DPCH as a benchmark, but transmit power of a TPC in a downlink DPCCH or the transmit power of the F-DPCH is controlled through inner loop power control, that is, controlled by using a TPC command in an uplink DPCCH. Therefore, when service data is transmitted on a DPDCH, inner loop power control must be performed at the same time, to ensure that both uplink and downlink service data can be successfully demodulated. In order that each UE can receive service data sent by a base station, before the base station sends the service data to the UE, a preamble stage needs to be introduced. During the preamble stage, a synchronization relationship between the base station and the UE is established, that is, an inner loop power control loop of an uplink DPCCH and a downlink DPCCH/F-DPCH between the base station and the UE is established, and the base station is able to obtain a relatively stable uplink channel path position of the UE and relatively stable channel estimation confidence. The base station sends a preamble TPC to the UE. FIG. 3 is a schematic diagram of introduction of a preamble TPC according to the embodiment of the present invention. FIG. 3 illustrates introduction of the preamble stage based on FIG. 2A. Introduction of the preamble stage based on FIG. 2B is similar, and is not described in detail herein in this embodiment. In FIG. 3, a dashed area represents the preamble TPC, and a blank area represents service data and a data TPC. Using a preamble stage of the second UE (UE2) as an example, in a slot (which corresponds to an area C in the figure) corresponding to the preamble stage, a TPC control word of a downlink channel not only needs to maintain inner loop power control for data transmission of the first UE (UE1) whose data transmission is not completed, but also needs to establish inner loop power control for the second UE (UE2). However, the preamble stage is not considered in a present R99 time division code channel multiplexing mechanism; due to a problem of code channel multiplexing, an end of the first sending time period in which the base station sends the first data TPC to the first UE (UE1) overlaps the sending time period in which the base station sends the second preamble TPC to the second UE (UE2), which results in a problem that transmit power control (Transmit Power Control, TPC for short) word resources are insufficient; consequently, the second UE (UE2) cannot establish inner loop power control according to the preamble TPC; as a result, the second UE (UE2) cannot normally receive the second service data at a beginning stage of the second sending time period.

The data sending method according to this embodiment is used to solve a problem that the second UE cannot normally receive the second service data at the beginning stage of the second sending time period in the case of code channel multiplexing. In a specific implementation process, before step 101, the base station sends a first preamble TPC to the first UE in a first pre-configured time period, so that the first UE establishes inner loop power control according to the first preamble TPC and can receive the first service data that is sent in the first sending time period by the base station. Persons skilled in this art may understand that both a data TPC and a preamble TPC in this embodiment are TPCs, where the preamble TPC is a TPC used to establish inner loop power control, and the data TPC is a TPC used to perform inner loop power control.

The first pre-configured time period is a time period in which the first UE sends the first preamble TPC, so that the first UE can establish inner loop power control and therefore can receive the first service data sent by the base station.

In step 101, the base station sends the first data TPC and the first service data to the first user equipment UE in the first sending time period, so that the first UE performs inner loop power control according to the first TPC.

In a dimension of time, the first pre-configured time period is before the first sending time period.

In step 102, the base station sends the second preamble TPC to the second UE in the second pre-configured time period, so that the second UE establishes inner loop power control according to the second preamble TPC and can receive the second service data that is sent in the second sending time period by the base station.

An overlap time period exists between the first sending time period and the second pre-configured time period. In a specific implementation process, the end of the first sending time period overlaps the second pre-configured time period, but the first data TPC and the second preamble TPC are sent on different channels. Therefore, it can be learned that even if an overlap time period exists between the first sending time period and the second pre-configured time period, because the two are sent on different channels, the two do not conflict, which ensures that the second UE can establish inner loop power control and therefore can receive the second service data sent by the base station.

After step 102, the base station sends a second TPC and the second service data to the second user equipment UE in the second sending time period, so that the second UE performs inner loop power control according to the second TPC.

In a dimension of time, the second pre-configured time period is before the second sending time period. The first sending time period and the second sending time period are adjacent in terms of time.

Persons skilled in the art may understand that actions executed by the base station in the first pre-configured time period and the first sending time period and actions executed in the second pre-configured time period and the second sending time period are the same, and a difference lies in sending destinations and sending times. In order to differentiate sending times (sending time for the first UE is before sending time for the second UE) and sending objects (the first UE and the second UE), the pre-configured time periods and the sending time periods in this embodiment are respectively classified into first and second pre-configured time periods and first and second time periods.

In the data sending method according to this embodiment, a base station sends a first data TPC and first service data to first user equipment UE in a first sending time period, and the base station sends a second preamble TPC to second UE in a second pre-configured time period. The first service data and the second service data are sent on a same code channel in a time division multiplexing manner, which resolves a problem that a downlink code channel is limited, and increases a quantity of downlink R99 users; and the first data TPC and the second preamble TPC are sent on different channels, and an overlap time period exists between the first sending time period and the second pre-configured time period, which ensures that the second UE can establish inner loop power control before a second sending time period, so that the second UE can receive, in the second sending time period, the second service data sent by the base station, thereby ultimately improving transmission efficiency of a downlink code channel.

FIG. 4 is a flowchart of Embodiment 1 of a data receiving method according to the present invention. As shown in FIG. 4, this embodiment is executed by user equipment, and the user equipment may be implemented by using software and/or hardware. The data receiving method according to this embodiment includes:

Step 401: User equipment UE receives a preamble transmit power control command TPC that is sent in a pre-configured time period by a base station, and establishes inner loop power control according to the preamble TPC.

Step 402: The UE receives a data transmit power control command TPC that is sent in a sending time period by the base station, and performs inner loop power control according to the data TPC.

Step 403: The UE receives, according to the inner loop power control, service data that is sent in the sending time period by the base station.

The service data sent by the base station to the UE and service data sent by the base station to another UE are sent on a same code channel in a time division multiplexing manner, and the pre-configured time period overlaps a sending time period of the another UE.

In a specific application process, before receiving the service data sent by the base station, the UE needs to establish inner loop power control according to the preamble TPC. The UE receives the data transmit power control command sent by the base station, and performs inner loop power control according to the data transmit power control command when receiving the service data.

Persons skilled in the art may understand that in the embodiment shown in FIG. 1, UEs are differentiated into first UE and second UE for ease of description, but in a specific implementation process, for the UEs, actions executed by all the UEs to implement the data receiving method in this embodiment are the same, and only receiving orders are different. An application scenario in this embodiment is similar to that in the embodiment shown in FIG. 1, and is not described in detail herein in this embodiment.

In the data receiving method according to this embodiment, user equipment UE receives a preamble transmit power control command TPC that is sent in a pre-configured time period by a base station, and establishes inner loop power control according to the preamble TPC; the UE receives a data transmit power control command TPC that is sent in a sending time period by the base station, and performs inner loop power control according to the data TPC; and the UE receives, according to the inner loop power control, service data that is sent in the sending time period by the base station, where the service data sent by the base station to the UE and service data sent by the base station to another UE are sent on a same code channel in a time division multiplexing manner, which resolves a problem that a downlink code channel is limited, and increases a quantity of R99 services that can be accommodated in downlink; and the preamble TPC ensures that the UE can establish inner loop power control before receiving a data service and therefore can receive, in a data service sending time period, the service data sent by the base station, thereby ultimately improving transmission efficiency of a downlink code channel.

The technical solutions of the method embodiments shown in FIG. 1 to FIG. 4 are described in detail below by using several specific embodiments.

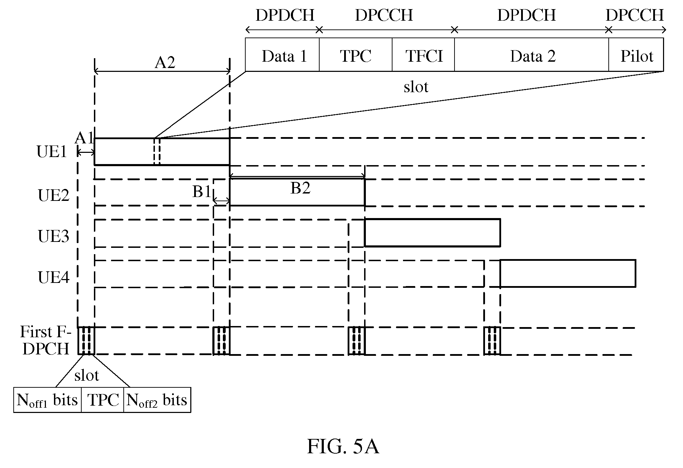

FIG. 5A is a schematic diagram of a code channel in Embodiment 1 of a data sending and receiving method according to the present invention. As shown in FIG. 5A, four UEs including UE1, UE2, UE3, and UE4 are used as examples in this embodiment. In this embodiment, first UE may be specifically UE1, and second UE may be specifically UE2. Persons skilled in the art may understand that the first UE in this embodiment may also be UE2 and the corresponding second UE may also be UE3, or the first UE in this embodiment may be UE3 and the corresponding second UE may be UE4, and the rest can be deduced by analogy if there are more UEs. Particularly, DPCHs of UE1, UE2, UE3, and UE4 are multiplexed on a same code channel, that is, DPDCHs and DPCCHs of the UEs are multiplexed on a same code channel. For clear illustration, FIG. 5A is drawn in a layer division manner in a drawing process. In this embodiment, UE1 and UE2 are used as examples for ease of description, where UE1 corresponds to the first UE, first service data, and a first data TPC, and UE2 corresponds to the second UE, second service data, and a second data TPC.

Particularly, the first service data (which corresponds to a DPDCH) and the first data TPC (which corresponds to a DPCCH) for the first UE are sent on a same code channel in a time division multiplexing manner; the second service data (which corresponds to a DPDCH) and the second data TPC (which corresponds to a DPCCH) for the second UE are sent on a same code channel in a time division multiplexing manner; and the first data TPC and the second preamble TPC are sent on different channels. Using the first UE as an example, as shown in FIG. 5A, in a first sending time period (A2), within one slot, a DPCH includes a DPDCH used for sending the first service data (parts Data1 and Data2) and a DPCCH used for sending the first data TPC and a transport format combination indicator (Transport Format Combination Indicator, TFCI for short) and used for sending a known pilot bit (Pilot) that supports channel estimation for performing coherent detection. Persons skilled in the art may understand that the transport format combination indicator and the pilot bit are optional items.

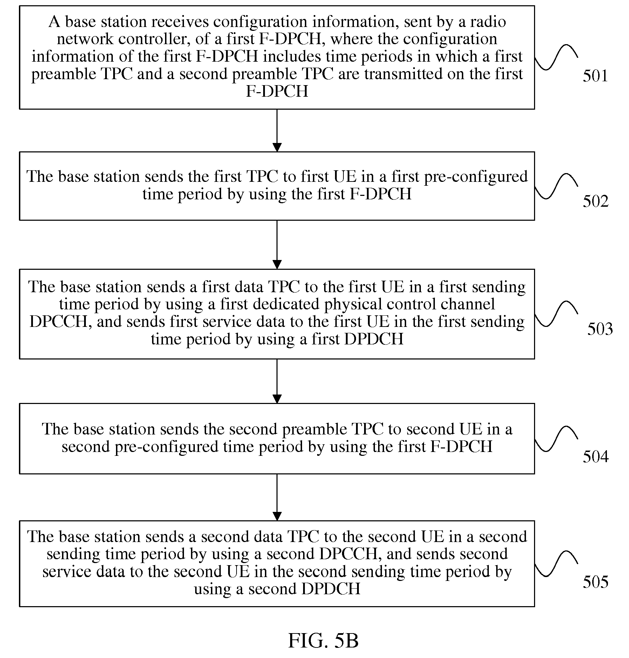

A specific data sending and receiving method may be shown in FIG. 5B. FIG. 5B is a schematic flowchart of Embodiment 1 of the data sending and receiving method according to the present invention. With reference to FIG. 5A and FIG. 5B, the method includes:
Step 501: A base station receives configuration information, sent by a radio network controller, of a first F-DPCH, where the configuration information of the first F-DPCH includes time periods in which a first preamble TPC and a second preamble TPC are transmitted on the first F-DPCH.

The first F-DPCH occupies a certain symbol (symbol) position in each slot (slot) on a code channel, where the symbol position is determined according to Noff1 bits and Noff2 bits that are configured by the radio network controller (Radio Network Controller, RNC for short). The time periods in which the first preamble TPC and the second preamble TPC are transmitted on the first F-DPCH are also configured by the RNC, for example, the first preamble power control command is transmitted in a time period A1 while the second preamble power control command is transmitted in a time period B1. The information may be obtained according to time multiplexing information about code channel multiplexing of different UEs, for example, the time periods A1 and B1 may be learned according to time periods A2 and B2. The base station may receive configuration information sent by the RNC, where the configuration information may include information such as positions of Noff1 bits and Noff2 bits and/or time division multiplexing information of different UEs, so that the base station can determine specific transmission time periods.

Step 502: The base station sends the first TPC to first UE in a first pre-configured time period by using the first F-DPCH.

The base station sends the first preamble TPC to the first UE in the first pre-configured time period (which corresponds to the time period A1 shown in FIG. 5A) by using the first F-DPCH. The first UE receives the first preamble TPC that is sent in the first pre-configured time period by using the first F-DPCH by the base station. Particularly, the preamble TPC is included within each slot of the time period A1.

Step 503: The base station sends a first data TPC to the first UE in a first sending time period by using a first dedicated physical control channel DPCCH, and sends first service data to the first UE in the first sending time period by using a first DPDCH.

The base station sends the first data TPC to the first UE in the first sending time period (which corresponds to the time period A2 shown in FIG. 5A) by using the first DPCCH, and sends the first service data to the first UE by using the first DPDCH. The first UE receives the first data TPC that is sent in the first sending time period by using the first DPCCH by the base station, and receives the first service data that is sent by using the first DPDCH by the base station.

Step 504: The base station sends the second preamble TPC to second UE in a second pre-configured time period by using the first F-DPCH.

The base station sends the second preamble TPC to the second UE in the second pre-configured time period (which corresponds to the time period B1 shown in FIG. 5A) by using the first F-DPCH. The second UE receives the second preamble TPC that is sent in the second pre-configured time period by using the second F-DPCH by the base station. Persons skilled in the art may understand that the first preamble TPC and the second preamble TPC may be transmitted by using a same F-DPCH, that is, the first F-DPCH.

Step 505: The base station sends a second data TPC to the second UE in a second sending time period by using a second DPCCH, and sends second service data to the second UE in the second sending time period by using a second DPDCH.

The base station sends the second data TPC to the second UE in the second sending time period (which corresponds to the time period B2 shown in FIG. 5A) by using the second DPCCH, and sends the second service data to the second UE by using the second DPDCH. The second UE receives the second data TPC that is sent in the second sending time period by using the second DPCCH by the base station, and receives the first service data that is sent by using the second DPDCH by the base station.

The method according to this embodiment resolves a conflict that a first data TPC and a second preamble TPC cannot be sent at the same time, which ensures that second UE can establish inner loop power control and receive second service data sent by a base station, thereby ultimately improving transmission efficiency of a downlink code channel.

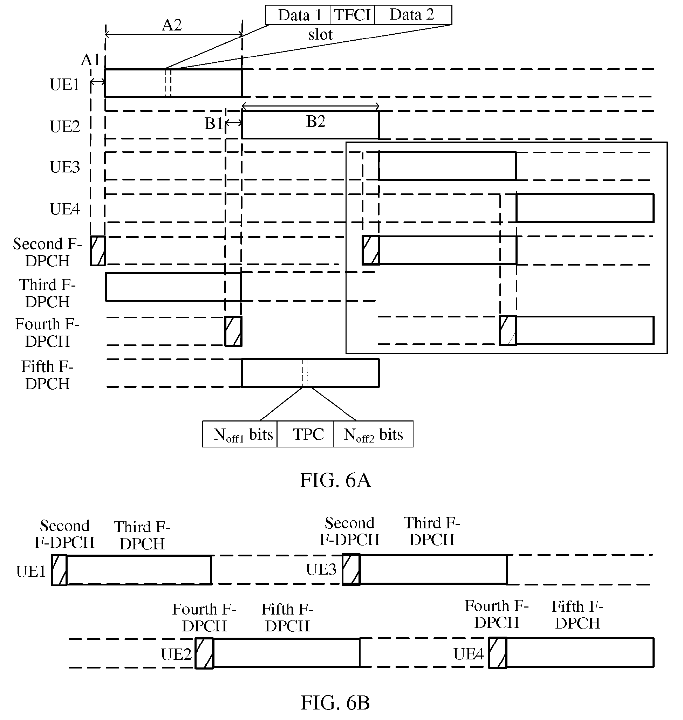

FIG. 6A is a schematic diagram 1 of a code channel in Embodiment 2 of a data sending and receiving method according to the present invention. As shown in FIG. 6A, four UEs including UE1, UE2, UE3, and UE4 are used as examples in this embodiment. In this embodiment, first UE may be specifically UE1, and second UE may be specifically UE2. Persons skilled in the art may understand that the first UE in this embodiment may also be UE2 and the corresponding second UE may also be UE3, or the first UE in this embodiment may be UE3 and the corresponding second UE may be UE4, and the rest can be deduced by analogy if there are more UEs. Particularly, DPDCHs of UE1, UE2, UE3, and UE4 are multiplexed on a same code channel. For clear illustration, FIG. 6A is drawn in a layer division manner in a drawing process. In this embodiment, UE1 and UE2 are used as examples for ease of description, where UE1 corresponds to the first UE, first service data, and a first data TPC; UE2 corresponds to the second UE, second service data, and a second TPC; and the first service data and the first data TPC are sent on different code channels, and the second service data and the second data TPC are sent on different code channels.

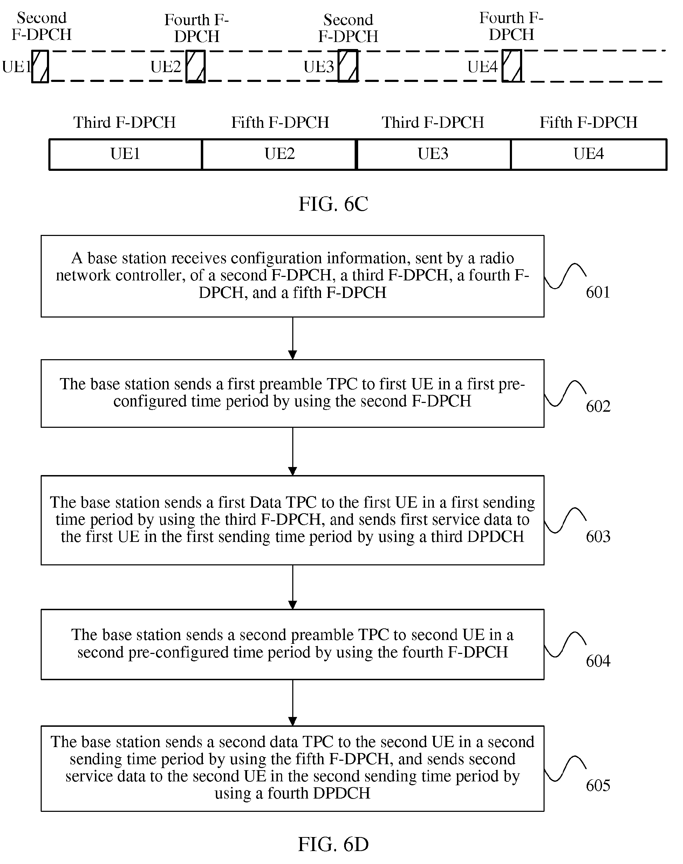

A specific data sending and receiving method may be shown in FIG. 6D. FIG. 6D is a schematic flowchart of Embodiment 2 of the data sending and receiving method according to the present invention. With reference to FIG. 6A and FIG. 6D, the method includes:
Step 601: A base station receives configuration information, sent by a radio network controller, of a second F-DPCH, a third F-DPCH, a fourth F-DPCH, and a fifth F-DPCH.

The configuration information of the second F-DPCH includes a time period in which a first preamble TPC is transmitted on the second F-DPCH; the configuration information of the third F-DPCH includes a time period in which a first data TPC is transmitted on the third F-DPCH; the configuration information of the fourth F-DPCH includes a time period in which a second preamble TPC is transmitted on the fourth F-DPCH; and the configuration information of the fifth F-DPCH includes a time period in which a second data TPC is transmitted on the fifth F-DPCH. In this embodiment, for a specific manner for determining a transmission time period, reference may be made to step 501, and details not described herein in detail in this embodiment.

Step 602: The base station sends a first preamble TPC to first UE in a first pre-configured time period by using the second F-DPCH.

The base station sends the first preamble TPC to the first UE in the first pre-configured time period (which corresponds to the time period A1 shown in FIG. 6A) by using the second F-DPCH. The first UE receives the first preamble TPC that is sent in the first pre-configured time period by using the second F-DPCH by the base station.

Step 603: The base station sends a first data TPC to the first UE in a first sending time period by using the third F-DPCH, and sends first service data to the first UE by using a third DPDCH.

The base station sends the first data TPC to the first UE in the first sending time period (which corresponds to the time period A2 shown in FIG. 6A) by using the third F-DPCH, and sends the first service data to the first UE by using the third DPDCH. The first UE receives the first data TPC that is sent in the first sending time period by using the third F-DPCH by the base station, and receives the first service data that is sent by using the third DPDCH by the base station. Particularly, within one slot of the time period A2, a third DPCH includes Data1, TFCI, and Data2, where TFCI is an optional item; and the third F-DPCH includes the second data TPC.

Step 604: The base station sends second preamble TPC to second UE in a second pre-configured time period by using the fourth F-DPCH.

The base station sends the second preamble TPC to the second UE in the second pre-configured time period (which corresponds to the time period B1 shown in FIG. 6A) by using the fourth F-DPCH. The second UE receives the second preamble TPC that is sent in the second pre-configured time period by using the fourth F-DPCH by the base station.

Step 605: The base station sends second data TPC to the second UE in a second sending time period by using the fifth F-DPCH, and sends second service data to the second UE by using a fourth DPDCH.

The base station sends the second data TPC to the second UE in the second sending time period (which corresponds to the time period B2 shown in FIG. 6A) by using the fifth F-DPCH, and sends the second service data to the second UE by using the fourth DPDCH. The second UE receives the second data TPC that is sent in the second sending time period by using the fifth F-DPCH by the base station, and receives the second service data that is sent by using the fourth DPDCH by the base station. Particularly, within one slot of the time period B2, a fifth DPCH includes Data1, TFCI, and Data2, where TFCI is an optional item; and the fifth F-DPCH includes the second data TPC.

Optionally, in this embodiment, the second F-DPCH, the third F-DPCH, the fourth F-DPCH, and the fifth F-DPCH are different F-DPCHs, that is, the four F-DPCHs are independent fractional dedicated physical control channels, and may be specifically the F-DPCHs, in FIG. 6A, used for transmitting the preamble TPCs and the data TPCs of UE1 and UE2.

Optionally, in this embodiment, the second F-DPCH and the third F-DPCH are multiplexed on a same F-DPCH, and the fourth F-DPCH and the fifth F-DPCH are multiplexed on a same F-DPCH. Specifically, as shown in FIG. 6A, when transmission is performed for UE3 and UE4, a preamble TPC and a data TPC of UE3 may be carried on the second and third F-DPCHs, and the preamble TPC and the data TPC of UE4 may be carried on the fourth and fifth F-DPCHs.

Optionally, in this embodiment, the second F-DPCH and the fourth F-DPCH are multiplexed on a same F-DPCH, and the third F-DPCH and the fifth F-DPCH are multiplexed on a same F-DPCH. Specifically, as shown in FIG. 6A, when transmission is performed for UE3 and UE4, preamble TPCs of UE3 and UE4 may be carried on the second and fourth F-DPCHs, and data TPCs of UE3 and UE4 may be carried on the third and fifth F-DPCHs.

Optionally, when the second F-DPCH and the third F-DPCH are multiplexed on a same F-DPCH, the method may be specifically shown in FIG. 6B. FIG. 6B is a schematic diagram 2 of a code channel in Embodiment 2 of the data sending and receiving method according to the present invention. After step 605, the method further includes:
sending a third data TPC to third UE in a third sending time period by using the third F-DPCH, and sending third service data to the third UE in the third sending time period by using a fifth dedicated physical data channel DPDCH; and
before the third sending time period, sending a third preamble TPC to the third UE in a third pre-configured time period by using the second F-DPCH, where the third pre-configured time period overlaps the second sending time period.

Correspondingly, when the second F-DPCH and the third F-DPCH are multiplexed on a same F-DPCH channel, and a sending time period corresponding to UE does not overlap a pre-configured time period, corresponding to another UE, of the another UE, receiving, by the UE, a preamble TPC and a data TPC and receiving, by the another UE, a preamble TPC and a data TPC are multiplexed on the second F-DPCH or the third F-DPCH.

Specifically, the sending, by the base station, the third preamble TPC to the third UE (UE3) and the sending, by the base station, the first preamble TPC to the first UE (UE1) are multiplexed on the second F-DPCH; and the sending, by the base station, the third data TPC to the third UE (UE3) and the sending, by the base station, the first data TPC to the first UE (UE1) are multiplexed on the third F-DPCH. It is the same with UE2 and UE4, and details are not described herein again.

Optionally, when the third F-DPCH and the fifth F-DPCH are multiplexed on a same F-DPCH, and the second F-DPCH and the fourth F-DPCH are multiplexed on a same F-DPCH, the method may be specifically shown in FIG. 6C. FIG. 6C is a schematic diagram 3 of a code channel in Embodiment 2 of the data sending and receiving method according to the present invention. After step 605, the method further includes:
sending a third data TPC to third UE in a third sending time period by using the third F-DPCH, and sending third service data to the third UE in the third sending time period by using a sixth dedicated physical data channel DPDCH; and
before the third sending time period, sending a third preamble TPC to the third UE in a third pre-configured time period by using the second F-DPCH, where the third pre-configured time period overlaps the second sending time period.

Correspondingly, when the second F-DPCH and the third F-DPCH are different F-DPCHs, and a sending time period corresponding to UE overlaps a pre-configured time period, corresponding to another UE, of another UE,
receiving, by the UE, a preamble TPC and receiving, by the another UE, a preamble TPC are multiplexed on the second F-DPCH; and receiving, by the UE, a data TPC and receiving, by the another UE, a data TPC are multiplexed on the third F-DPCH.

Specifically, the sending, by the base station, the third preamble TPC to the third UE (UE3) and the sending, by the base station, the first preamble TPC to the first UE (UE1) are multiplexed on the second F-DPCH; and the sending, by the base station, the third data TPC to the third UE (UE3) and the sending, by the base station, the first data TPC to the first UE (UE1) are multiplexed on the third F-DPCH. It is the same with UE2 and UE4, and details are not described herein again.

The method according to this embodiment resolves a conflict that a first data TPC and a second preamble TPC cannot be sent at the same time, which ensures that second UE can establish inner loop power control and receive second service data sent by a base station, thereby saving channel resources and also improving transmission efficiency of a downlink code channel.

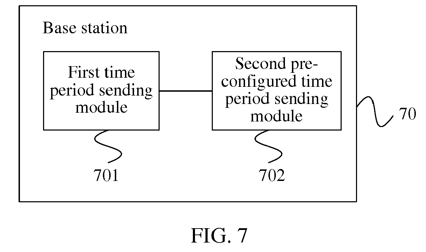

FIG. 7 is a schematic structural diagram of Embodiment 1 of a base station according to the present invention. As shown in FIG. 7, the base station 70 according to this embodiment of the present invention includes: a first time period sending module 701 and a second pre-configured time period sending module 702, where
the first time period sending module 701 is configured to send a first data transmit power control command TPC and first service data to first user equipment UE in a first sending time period, so that the first UE performs inner loop power control according to the first data TPC and receives the first service data; and
the second pre-configured time period sending module 702 is configured to send a second preamble transmit power control command TPC to second user equipment UE in a second pre-configured time period, so that the second UE establishes inner loop power control according to the second preamble TPC and receives second service data in a second sending time period, where
the first service data and the second service data are sent on a same code channel in a time division multiplexing manner, the first data TPC and the second preamble TPC are sent on different channels, and an overlap time period exists between the first sending time period and the second pre-configured time period.

The base station in this embodiment may be configured to execute the technical solutions of the foregoing method embodiments. Implementation principle and technical effects thereof are similar, and details are not described herein again.

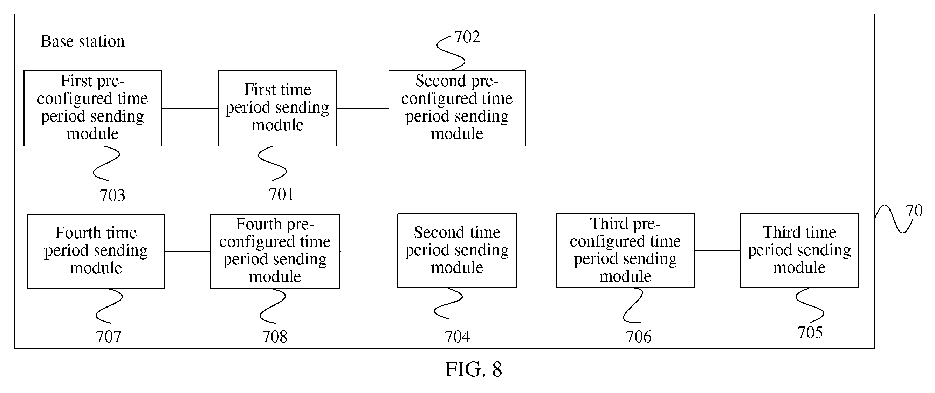

FIG. 8 is a schematic structural diagram of Embodiment 2 of a base station according to the present invention. As shown in FIG. 8, this embodiment of the present invention is implemented based on the embodiment in FIG. 7, and is specifically as follows:

Optionally, the base station 70 further includes:
a first pre-configured time period sending module 703, configured to: before the first data transmit power control command TPC and the first service data are sent to the first user equipment UE in the first sending time period, send a first preamble TPC to the first UE in a first pre-configured time period, so that the first UE establishes inner loop power control according to the first preamble TPC and receives the first service data in the first sending time period; and
a second time period sending module 704, configured to: after the second preamble transmit power control command TPC is sent to the second user equipment UE in the second pre-configured time period, send a second data TPC and the second service data to the second UE in the second sending time period, so that the second UE performs inner loop power control according to the second data TPC and receives the second service data.

Optionally, the first time period sending module 701 is specifically configured to: send the first data TPC to the first UE in the first sending time period by using a first dedicated physical control channel DPCCH, and send the first service data to the first UE in the first sending time period by using a first dedicated physical data channel DPDCH; and
the second time period sending module 704 is specifically configured to: send the second data TPC to the second UE in the second sending time period by using a second DPCCH, and send the second service data to the second UE in the second sending time period by using a second DPDCH, where
the first data TPC and the first service data are sent on a same code channel in a time division multiplexing manner, and the second data TPC and the second service data are sent on a same code channel in a time division multiplexing manner.

Optionally, the first pre-configured time period sending module 703 is specifically configured to: send the first preamble TPC to the first UE in the first pre-configured time period by using a first fractional dedicated physical control channel F-DPCH; and
the second pre-configured time period sending module is specifically configured to: send the second preamble TPC to the second UE in the second pre-configured time period by using the first F-DPCH.

Optionally, the first time period sending module 701 is specifically configured to: send the first data TPC to the first UE in the first sending time period by using a third fractional dedicated physical control channel F-DPCH, and send the first service data to the first UE in the first sending time period by using a third dedicated physical data channel DPDCH; and
the second time period sending module 704 is specifically configured to: send the second data TPC to the second UE in the second sending time period by using a fifth F-DPCH, and send the second service data to the second UE in the second sending time period by using a fourth DPDCH, where
the first data TPC and the first service data are sent on different code channels, and the second data TPC and the second service data are sent on different code channels.

Optionally, the first pre-configured time period sending module 703 is specifically configured to: send the first preamble TPC to the first UE in the first pre-configured time period by using a second F-DPCH; and
the second pre-configured time period sending module 702 is specifically configured to: send the second preamble TPC to the second UE in the second pre-configured time period by using a fourth F-DPCH.

Optionally, the second F-DPCH, the third F-DPCH, the fourth F-DPCH, and the fifth F-DPCH are different F-DPCHs; or
the second F-DPCH and the fourth F-DPCH are multiplexed on a same F-DPCH, and the third F-DPCH and the fifth F-DPCH are multiplexed on a same F-DPCH; or
the second F-DPCH and the third F-DPCH are multiplexed on a same F-DPCH, and the fourth F-DPCH and the fifth F-DPCH are multiplexed on a same F-DPCH.

Optionally, the base station 70 further includes:
a third time period sending module 705, configured to: when the second F-DPCH and the third F-DPCH are multiplexed on a same F-DPCH, after the second data transmit power control command TPC and the second service data are sent to the second UE in the second sending time period, send a third data TPC to third UE in a third sending time period by using the third F-DPCH, and send third service data to the third UE in the third sending time period by using a fifth dedicated physical data channel DPDCH; and
a third pre-configured time period sending module 706, configured to: before the third sending time period, send a third preamble TPC to the third UE in a third pre-configured time period by using the second F-DPCH, where the third pre-configured time period overlaps the second sending time period.

Optionally, the base station 70 further includes:
a fourth time period sending module 707, configured to: when the third F-DPCH and the fifth F-DPCH are multiplexed on a same F-DPCH, and the second F-DPCH and the fourth F-DPCH are multiplexed on a same F-DPCH, after the second data transmit power control command TPC and the second service data are sent to the second UE in the second sending time period, send a third data TPC to third UE in a third sending time period by using the third F-DPCH, and send third service data to the third UE in the third sending time period by using a sixth dedicated physical data channel DPDCH; and
a fourth pre-configured time period sending module 708, configured to: before the third sending time period, send a third preamble TPC to the third UE in a third pre-configured time period by using the second F-DPCH, where the third pre-configured time period overlaps the second sending time period.

The base station in this embodiment may be configured to execute the technical solutions of the foregoing method embodiments. Implementation principle and technical effects thereof are similar, and details are not described herein again.

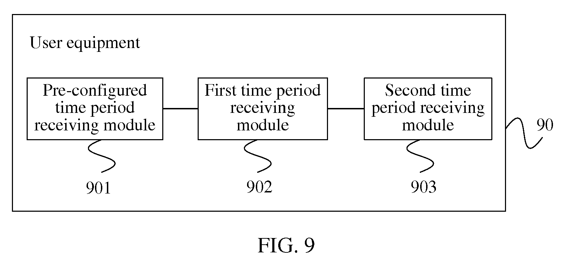

FIG. 9 is a schematic structural diagram of Embodiment 1 of user equipment according to the present invention. As shown in FIG. 9, the user equipment 90 according to this embodiment of the present invention includes: a pre-configured time period receiving module 901, a first time period receiving module 902, and a second time period receiving module 903, where
the pre-configured time period receiving module 901 is configured to receive a preamble transmit power control command TPC that is sent in a pre-configured time period by a base station, and establish inner loop power control according to the preamble TPC;
the first time period receiving module 902 is configured to receive a data transmit power control command TPC that is sent in a sending time period by the base station, and perform inner loop power control according to the data TPC; and
the second time period receiving module 903 is configured to receive, according to the inner loop power control, service data that is sent in the sending time period by the base station, where
the service data sent by the base station to the UE and service data sent by the base station to another UE are sent on a same code channel in a time division multiplexing manner, and the pre-configured time period overlaps a sending time period of the another UE.

The user equipment in this embodiment may be configured to execute the technical solutions of the foregoing method embodiments. Implementation principle and technical effects thereof are similar, and details are not described herein again.

Optionally, the pre-configured time period receiving module 901 is specifically configured to: receive the preamble TPC that is sent in the pre-configured time period by using a first fractional dedicated physical data channel F-DPCH by the base station;
the first time period receiving module 902 is specifically configured to: receive the data TPC that is sent by using a dedicated physical control channel DPCCH by the base station; and
the second time period receiving module 903 is specifically configured to: receive the service data that is sent in the sending time period by using a first dedicated physical data channel DPDCH by the base station, where
the data TPC and the service data are received on a same code channel in a time division multiplexing manner.

Optionally, the pre-configured time period receiving module 901 is specifically configured to: receive the preamble TPC that is sent in the pre-configured time period by using a second fractional dedicated physical data channel F-DPCH by the base station;
the first time period receiving module 902 is specifically configured to: receive the data TPC that is sent by using the third fractional dedicated physical data channel F-DPCH by the base station; and
the second time period receiving module 903 is specifically configured to: receive the service data that is sent in the sending time period by using a second dedicated physical data channel DPDCH by the base station, where
the service data and the data TPC are received on different code channels.

Optionally, the second F-DPCH and the third F-DPCH are different F-DPCHs; or
the second F-DPCH and the third F-DPCH are multiplexed on a same F-DPCH channel.

Optionally, when the second F-DPCH and the third F-DPCH are multiplexed on a same F-DPCH channel, and the sending time period corresponding to the UE does not overlap a pre-configured time period, corresponding to another UE, of the another UE,
the receiving, by the UE, the preamble TPC and the data TPC and receiving, by the another UE, the preamble TPC and the data TPC are multiplexed on the second F-DPCH or the third F-DPCH.

Optionally, when the second F-DPCH and the third F-DPCH are different F-DPCHs, and the sending time period corresponding to the UE overlaps a pre-configured time period, corresponding to another UE, of the another UE,
the receiving, by the UE, the preamble TPC and receiving, by the another UE, the preamble TPC are multiplexed on the second F-DPCH; and the receiving, by the UE, the data TPC and receiving, by the another UE, the data TPC are multiplexed on the third F-DPCH.

The user equipment in this embodiment may be configured to execute the technical solutions of the foregoing method embodiments. Implementation principle and technical effects thereof are similar, and details are not described herein again.

Persons of ordinary skill in the art may understand that all or some of the steps of the method embodiments may be implemented by a program instructing related hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data sending method, comprising:
sending a first data transmit power control command TPC and first service data to first user equipment UE in a first sending time period, so that the first UE performs inner loop power control according to the first data TPC and receives the first service data; and
sending a second preamble transmit power control command TPC to second user equipment UE in a second pre-configured time period, so that the second UE establishes inner loop power control according to the second preamble TPC and receives second service data in a second sending time period, wherein
the first service data and the second service data are sent on a same code channel in a time division multiplexing manner, the first data TPC and the second preamble TPC are sent on different channels, and an overlap time period exists between the first sending time period and the second pre-configured time period.

2. The method according to claim 1, wherein before the sending a first data transmit power control command TPC and first service data to first user equipment UE in a first sending time period, the method further comprises:
sending a first preamble TPC to the first UE in a first pre-configured time period, so that the first UE establishes inner loop power control according to the first preamble TPC and receives the first service data in the first sending time period; and
after the sending a second preamble transmit power control command TPC to second user equipment UE in a second pre-configured time period, the method further comprises:
sending a second data TPC and the second service data to the second UE in the second sending time period, so that the second UE performs inner loop power control according to the second data TPC and receives the second service data.

3. The method according to claim 2, wherein the sending a first data transmit power control command TPC and first service data to first user equipment UE in a first sending time period comprises:
sending the first data TPC to the first UE in the first sending time period by using a first dedicated physical control channel DPCCH, and sending the first service data to the first UE in the first sending time period by using the first dedicated physical data channel DPDCH; and
the sending a second data TPC and the second service data to the second UE in the second sending time period comprises:
sending the second data TPC to the second UE in the second sending time period by using a second DPCCH, and sending the second service data to the second UE in the second sending time period by using the second DPDCH, wherein
the first data TPC and the first service data are sent on a same code channel in a time division multiplexing manner, and the second data TPC and the second service data are sent on a same code channel in a time division multiplexing manner.

4. The method according to claim 3, wherein the sending a first preamble TPC to the first UE in a first pre-configured time period comprises:
sending the first preamble TPC to the first UE in the first pre-configured time period by using a first fractional dedicated physical control channel F-DPCH; and
the sending a second preamble transmit power control command TPC to second user equipment UE in a second pre-configured time period comprises:
sending the second preamble TPC to the second UE in the second pre-configured time period by using the first F-DPCH.

5. The method according to claim 2, wherein the sending a first data transmit power control command TPC and first service data to first user equipment UE in a first sending time period comprises:
sending the first data TPC to the first UE in the first sending time period by using a third fractional dedicated physical control channel F-DPCH, and sending the first service data to the first UE in the first sending time period by using a third dedicated physical data channel DPDCH; and
the sending a second data TPC and the second service data to the second UE in the second sending time period comprises:
sending the second data TPC to the second UE in the second sending time period by using a fifth F-DPCH, and sending the second service data to the second UE in the second sending time period by using a fourth DPDCH, wherein
the first data TPC and the first service data are sent on different code channels, and the second data TPC and the second service data are sent on different code channels.

6. The method according to claim 5, wherein the sending a first preamble TPC to the first UE in a first pre-configured time period comprises:
sending the first preamble TPC to the first UE in the first pre-configured time period by using a second F-DPCH; and
the sending a second preamble transmit power control command TPC to second user equipment UE in a second pre-configured time period comprises:
sending the second preamble TPC to the second UE in the second pre-configured time period by using a fourth F-DPCH.

7. The method according to claim 6, wherein
the second F-DPCH, the third F-DPCH, the fourth F-DPCH, and the fifth F-DPCH are different F-DPCHs; or
the second F-DPCH and the fourth F-DPCH are multiplexed on a same F-DPCH, and the third F-DPCH and the fifth F-DPCH are multiplexed on a same F-DPCH; or
the second F-DPCH and the third F-DPCH are multiplexed on a same F-DPCH, and the fourth F-DPCH and the fifth F-DPCH are multiplexed on a same F-DPCH.

8. The method according to claim 7, wherein when the second F-DPCH and the third F-DPCH are multiplexed on a same F-DPCH, after the sending a second data transmit power control command TPC and the second service data to the second UE in the second sending time period, the method further comprises:
sending a third data TPC to third UE in a third sending time period by using the third F-DPCH, and sending third service data to the third UE in the third sending time period by using a fifth dedicated physical data channel DPDCH; and
before the third sending time period, sending a third preamble TPC to the third UE in a third pre-configured time period by using the second F-DPCH, wherein the third pre-configured time period overlaps the second sending time period.

9. The method according to claim 7, wherein when the third F-DPCH and the fifth F-DPCH are multiplexed on a same F-DPCH, and the second F-DPCH and the fourth F-DPCH are multiplexed on a same F-DPCH, after the sending a second data transmit power control command TPC and the second service data to the second UE in the second sending time period, the method further comprises:
sending a third data TPC to third UE in a third sending time period by using the third F-DPCH, and sending third service data to the third UE in the third sending time period by using a sixth dedicated physical data channel DPDCH; and
before the third sending time period, sending a third preamble TPC to the third UE in a third pre-configured time period by using the second F-DPCH, wherein the third pre-configured time period overlaps the second sending time period.

10. A data receiving method, comprising:
receiving, by user equipment UE, a preamble transmit power control command TPC that is sent in a pre-configured time period by a base station, and establishing inner loop power control according to the preamble TPC;
receiving, by the UE, a data transmit power control command TPC that is sent in a sending time period by the base station, and performing inner loop power control according to the data TPC; and
receiving, by the UE according to the inner loop power control, service data that is sent in the sending time period by the base station, wherein
the service data sent by the base station to the UE and service data sent by the base station to another UE are sent on a same code channel in a time division multiplexing manner, and the pre-configured time period overlaps a sending time period of the another UE.

11. The method according to claim 10, wherein the receiving, by user equipment UE, a preamble transmit power control command TPC that is sent in a pre-configured time period by a base station comprises:
receiving, by the UE, the preamble TPC that is sent in the pre-configured time period by using a first fractional dedicated physical data channel F-DPCH by the base station;
the receiving, by the UE, a data transmit power control command TPC that is sent in a sending time period by the base station comprises:
receiving, by the UE, the data TPC that is sent by using a dedicated physical control channel DPCCH by the base station; and
the receiving, by the UE, service data that is sent in the sending time period by the base station comprises:
receiving, by the UE, the service data that is sent in the sending time period by using a first dedicated physical data channel DPDCH by the base station, wherein
the data TPC and the service data are received on a same code channel in a time division multiplexing manner.

12. The method according to claim 10, wherein the receiving, by user equipment UE, a preamble transmit power control command TPC that is sent in a pre-configured time period by a base station comprises:
receiving, by the UE, the preamble TPC that is sent in the pre-configured time period by using a second fractional dedicated physical data channel F-DPCH by the base station;
the receiving, by the UE, a data transmit power control command TPC that is sent in a sending time period by the base station comprises:
receiving, by the UE, the data TPC that is sent by using the third fractional dedicated physical data channel F-DPCH by the base station; and
the receiving, by the UE, service data that is sent in the sending time period by the base station comprises:
receiving, by the UE, the service data that is sent in the sending time period by using a second dedicated physical data channel DPDCH by the base station, wherein
the service data and the data TPC are received on different code channels.

13. The method according to claim 12, wherein
the second F-DPCH and the third F-DPCH are different F-DPCHs; or
the second F-DPCH and the third F-DPCH are multiplexed on a same F-DPCH channel.

14. The method according to claim 13, wherein when the second F-DPCH and the third F-DPCH are multiplexed on a same F-DPCH channel, and the sending time period corresponding to the UE does not overlap a pre-configured time period, corresponding to another UE, of the another UE,
the receiving, by the UE, the preamble TPC and the data TPC and receiving, by the another UE, the preamble TPC and the data TPC are multiplexed on the second F-DPCH or the third F-DPCH.

15. The method according to claim 13, wherein when the second F-DPCH and the third F-DPCH are different F-DPCHs, and the sending time period corresponding to the UE overlaps a pre-configured time period, corresponding to another UE, of the another UE,
the receiving, by the UE, the preamble TPC and receiving, by the another UE, the preamble TPC are multiplexed on the second F-DPCH; and the receiving, by the UE, the data TPC and receiving, by the another UE, the data TPC are multiplexed on the third F-DPCH.

16. Abase station, comprising:
a first time period sending module, configured to send a first data transmit power control command TPC and first service data to first user equipment UE in a first sending time period, so that the first UE performs inner loop power control according to the first data TPC and receives the first service data; and
a second pre-configured time period sending module, configured to send a second preamble transmit power control command TPC to second user equipment UE in a second pre-configured time period, so that the second UE establishes inner loop power control according to the second preamble TPC and receives second service data in a second sending time period, wherein
the first service data and the second service data are sent on a same code channel in a time division multiplexing manner, the first data TPC and the second preamble TPC are sent on different channels, and an overlap time period exists between the first sending time period and the second pre-configured time period.

17. The base station according to claim 16, further comprising:
a first pre-configured time period sending module, configured to: before the first data transmit power control command TPC and the first service data are sent to the first user equipment UE in the first sending time period, send a first preamble TPC to the first UE in a first pre-configured time period, so that the first UE establishes inner loop power control according to the first preamble TPC and receives the first service data in the first sending time period; and
a second time period sending module, configured to: after the second preamble transmit power control command TPC is sent to the second user equipment UE in the second pre-configured time period, send a second data TPC and the second service data to the second UE in the second sending time period, so that the second UE performs inner loop power control according to the second data TPC and receives the second service data.

18. The base station according to claim 17, wherein the first time period sending module is specifically configured to: send the first data TPC to the first UE in the first sending time period by using a first dedicated physical control channel DPCCH, and send the first service data to the first UE in the first sending time period by using a first dedicated physical data channel DPDCH; and
the second time period sending module is specifically configured to: send the second data TPC to the second UE in the second sending time period by using a second DPCCH, and send the second service data to the second UE in the second sending time period by using a second DPDCH, wherein
the first data TPC and the first service data are sent on a same code channel in a time division multiplexing manner, and the second data TPC and the second service data are sent on a same code channel in a time division multiplexing manner.

19. The base station according to claim 18, wherein the first pre-configured time period sending module is specifically configured to: send the first preamble TPC to the first UE in the first pre-configured time period by using a first fractional dedicated physical control channel F-DPCH; and
the second pre-configured time period sending module is specifically configured to: send the second preamble TPC to the second UE in the second pre-configured time period by using the first F-DPCH.

20. The base station according to claim 17, wherein the first time period sending module is specifically configured to: send the first data TPC to the first UE in the first sending time period by using a third fractional dedicated physical control channel F-DPCH, and send the first service data to the first UE in the first sending time period by using a third dedicated physical data channel DPDCH; and
the second time period sending module is specifically configured to: send the second data TPC to the second UE in the second sending time period by using a fifth F-DPCH, and send the second service data to the second UE in the second sending time period by using a fourth DPDCH, wherein
the first data TPC and the first service data are sent on different code channels, and the second data TPC and the second service data are sent on different code channels.

21. The base station according to claim 20, wherein the first pre-configured time period sending module is specifically configured to: send the first preamble TPC to the first UE in the first pre-configured time period by using a second F-DPCH; and
the second pre-configured time period sending module is specifically configured to: send the second preamble TPC to the second UE in the second pre-configured time period by using a fourth F-DPCH.

22. The base station according to claim 21, wherein
the second F-DPCH, the third F-DPCH, the fourth F-DPCH, and the fifth F-DPCH are different F-DPCHs; or
the second F-DPCH and the fourth F-DPCH are multiplexed on a same F-DPCH, and the third F-DPCH and the fifth F-DPCH are multiplexed on a same F-DPCH; or
the second F-DPCH and the third F-DPCH are multiplexed on a same F-DPCH, and the fourth F-DPCH and the fifth F-DPCH are multiplexed on a same F-DPCH.

23. The base station according to claim 22, further comprising:
a third time period sending module, configured to: when the second F-DPCH and the third F-DPCH are multiplexed on a same F-DPCH, after the second data transmit power control command TPC and the second service data are sent to the second UE in the second sending time period, send a third data TPC to third UE in a third sending time period by using the third F-DPCH, and send third service data to the third UE in the third sending time period by using a fifth dedicated physical data channel DPDCH; and
a third pre-configured time period sending module, configured to: before the third sending time period, send a third preamble TPC to the third UE in a third pre-configured time period by using the second F-DPCH, wherein the third pre-configured time period overlaps the second sending time period.

24. The base station according to claim 22, further comprising:
a fourth time period sending module, configured to: when the third F-DPCH and the fifth F-DPCH are multiplexed on a same F-DPCH, and the second F-DPCH and the fourth F-DPCH are multiplexed on a same F-DPCH, after the second data transmit power control command TPC and the second service data are sent to the second UE in the second sending time period, send a third data TPC to third UE in a third sending time period by using the third F-DPCH, and send third service data to the third UE in the third sending time period by using a sixth dedicated physical data channel DPDCH; and
a fourth pre-configured time period sending module, configured to: before the third sending time period, send a third preamble TPC to the third UE in a third pre-configured time period by using the second F-DPCH, wherein the third pre-configured time period overlaps the second sending time period.

25. User equipment, comprising:
a pre-configured time period receiving module, configured to receive a preamble transmit power control command TPC that is sent in a pre-configured time period by a base station, and establish inner loop power control according to the preamble TPC;
a first time period receiving module, configured to receive a data transmit power control command TPC that is sent in a sending time period by the base station, and perform inner loop power control according to the data TPC; and
a second time period receiving module, configured to receive, according to the inner loop power control, service data that is sent in the sending time period by the base station, wherein
the service data sent by the base station to the UE and service data sent by the base station to another UE are sent on a same code channel in a time division multiplexing manner, and the pre-configured time period overlaps a sending time period of the another UE.

26. The user equipment according to claim 25, wherein the pre-configured time period receiving module is specifically configured to: receive the preamble TPC that is sent in the pre-configured time period by using a first fractional dedicated physical data channel F-DPCH by the base station;
the first time period receiving module is specifically configured to: receive the data TPC that is sent by using a dedicated physical control channel DPCCH by the base station; and
the second time period receiving module is specifically configured to: receive the service data that is sent in the sending time period by using a first dedicated physical data channel DPDCH by the base station, wherein
the data TPC and the service data are received on a same code channel in a time division multiplexing manner.

27. The user equipment according to claim 25, wherein the pre-configured time period receiving module is specifically configured to: receive the preamble TPC that is sent in the pre-configured time period by using a second fractional dedicated physical data channel F-DPCH by the base station;
the first time period receiving module is specifically configured to: receive the data TPC that is sent by using the third fractional dedicated physical data channel F-DPCH by the base station; and
the second time period receiving module is specifically configured to: receive the service data that is sent in the sending time period by using a second dedicated physical data channel DPDCH by the base station, wherein
the service data and the data TPC are received on different code channels.

28. The user equipment according to claim 27, wherein
the second F-DPCH and the third F-DPCH are different F-DPCHs; or
the second F-DPCH and the third F-DPCH are multiplexed on a same F-DPCH channel.

29. The user equipment according to claim 28, wherein when the second F-DPCH and the third F-DPCH are multiplexed on a same F-DPCH channel, and the sending time period corresponding to the UE does not overlap a pre-configured time period, corresponding to another UE, of the another UE,
the receiving, by the UE, the preamble TPC and the data TPC and receiving, by the another UE, the preamble TPC and the data TPC are multiplexed on the second F-DPCH or the third F-DPCH.

30. The user equipment according to claim 28, wherein when the second F-DPCH and the third F-DPCH are different F-DPCHs, and the sending time period corresponding to the UE overlaps a pre-configured time period, corresponding to another UE, of the another UE,
the receiving, by the UE, the preamble TPC and receiving, by the another UE, the preamble TPC are multiplexed on the second F-DPCH; and the receiving, by the UE, the data TPC and receiving, by the another UE, the data TPC are multiplexed on the third F-DPCH.
